# EUROPÄISCHE PATENTANMELDUNG

(11) **EP 1 484 475 A2**
(43) Veröffentlichungstag der Anmeldung: **08.12.2004**
(21) Anmeldenummer: 04090208.2
(22) Anmeldetag: 27.05.2004
(51) Int. Cl.: F01D 5/30, F01D 5/28

(54) **Verdichterschaufelfuss für Triebwerksschaufeln von Flugzeugtriebwerken**

(30) Priorität: 06.06.2003 DE 10326719
(71) Anmelder: Rolls-Royce Deutschland Ltd & Co KG, 15827 Dahlewitz (DE)
(72) Erfinder: Schreiber, Karl, 15806 Mellensee (DE)
(74) Vertreter: Wablat, Wolfgang, Dr.Dr.

(57) **Zusammenfassung**

Bei einer Verdichterschaufel (1) für Flugzeugtriebwerke, die aus einem Faserverbundkern (4) mit metallischer Umhüllung gebildet ist und die einen mit einem Schaufelblatt (2) verbundenen Schaufelfuß (3) umfasst, der in einer Ausnehmung (9) einer Verdichterscheibe (10) gehalten ist, ist der Faserverbundkern aus in Querrichtung zusammengepressten Fasern mit anschließender Matrixinfiltration gebildet und über eine Oberflächenvergrößerung durch Mikrostrukturierung (7) innig mit den Innenflächen der Umhüllung verbunden. Die Kräfte werden somit direkt über das Fasermaterial in den Schaufelfuß geleitet. Die gegenüberliegenden Seitenflanken des in Längsrichtung geraden Schaufelfußes bilden jeweils kreisbogenförmige, auf unterschiedlichen Mittelpunkten (M1, M2) basierende Stützflächen (8), die einen gleichermaßen gewölbten Stützbereich (11) in der Ausnehmung kontaktieren, um eine begrenzte, gedämpfte Pendelbewegung zum Ausgleich der auf den Faserverbundkern wirkenden Biegekräfte zu ermöglichen.

## Beschreibung

Die Erfindung betrifft einen Verdichterschaufelfuß für Triebwerksschaufeln von Flugzeugtriebwerken, der aus einem Faserverbundkern mit metallischer Umhüllung gebildet ist und der in einer Ausnehmung einer Verdichterscheibe gehalten ist.

Die Fanschaufeln (Fanblades, Verdichterschaufeln) von Gasturbinentriebwerken werden zur Gewichtseinsparung bekanntermaßen aus faserverstärkten Kunststoffen mit einer metallischen Umhüllung hergestellt. Über einen schwalbenschwanzartig geformten, in seiner Längsrichtung gekrümmten Schaufelfuß ist die Schaufel in einer entsprechend angepassten Ausnehmung der Verdichterscheibe (Rotor) starr befestigt. Durch Fliehkräfte, Gasdruck und von dem strömenden Medium angeregte Schwingungen des Schaufelblattes sind die Verdichterschaufeln von Strömungsmaschinen erheblichen Belastungen ausgesetzt, die bei Flugzeugtriebwerken durch den beim Auftreffen eines Vogels auf das Schaufelrad bewirkten Vogelschlag extrem hoch werden und zur Zerstörung der betreffenden Schaufel mit den daraus resultierenden schwerwiegenden Folgeschäden führen können.

Beispielsweise beschreibt die EP 0 353 672 B1 eine Schaufel aus faserverstärktem Werkstoff mit einem Schaufelkern und einem sich radial zum Rotor erstreckenden Schaufelschaft, der fest mit dem Rotor verbunden ist. Ein im Wesentlichen radialer Faserstrang durchläuft den Schaufelschaft und den Schaufelkern und ist von einer Außenhaut überzogen, die im Übergangsbereich zum Rotor zu einem an diesem befestigten Flansch ausgeformt ist.

Bei einer aus der US 40 40 770 bekannten, aus einem Fasermaterial gebildeten Verdichterschaufel sind im Bereich des schwalbenschwanzartig geformten Schaufelfußes zwischen den Faserschichten Versteifungskeile aus einem homogenen Material, zum Beispiel Titan, angeordnet, um in diesem hochbelasteten Bereich eine lasttragende Struktur auszubilden. An der Außenseite des Schaufelfußes ist zum Schutz der Faserschichten und zur Erzielung einer gleichmäßigen Kraftübertragung zwischen Schaufelfuß und Verdichterscheibe eine Auflage aus dem gleichen homogenen Material vorgesehen. Der schwalbenschwanzartige Schaufelfuß weist ebene seitliche Längsflächen auf und ist daher starr in der entsprechend geformten Ausnehmung der Verdichterscheibe arretiert, so dass die auf die Schaufel wirkenden Kräfte in vollem Umfang von dieser aufgenommen werden. Zwischen dem Fasermaterial und den Einsätzen bzw. Auflagen aus homogenem Material befindet sich eine Übergangsschicht, deren Elastizitätsmodul größer als der des Fasermaterials und kleiner als der des Materials der Einsatzkeile bzw. Auflagen ist. Dieses Übergangsmaterial soll die thermischen Spannungen an der Schnittstelle zwischen Fasermaterial und dem homogenen Versteifungs- bzw. Auflagematerial verhindern und die Tragfähigkeit der Schaufeln verbessern sowie deren Lebensdauer verlängern.

Das Problem bei den bekannten, insbesondere mit einem kohlenstofffaserverstärkten Kunststoffkern ausgebildeten Verdichterschaufeln besteht insbesondere darin, dass dieses Compositmaterial bzw. die entsprechende Verdichterschaufel nicht in der Lage sind, die bei extremer Belastung auftretenden hohen Kräfte aufzunehmen und zu übertragen. Zum einen sind die Ermüdungsstabilität und die dynamische Festigkeit des Faserverbundkerns nicht ausreichend und die auf die Schaufel wirkenden hohen Zugkräfte werden nicht in dem erforderlichen Umfang in den Schaufelfuß eingeleitet, das heißt, von dem Composit-Material auf den metallischen Teil des Schaufelfußes und von dort auf die Verdichterscheibe übertragen. Zum anderen ist das Faserverbundmaterial nicht in der Lage, die bei einem Vogelschlag auftretende hohe Biegebelastung aufzunehmen. Schließlich treten an der Verbindungsstelle des Schaufelfußes mit der Verdichterscheibe hohe Klemmkräfte und örtlich begrenzte Flächenpressungen auf, die einerseits zu einer Ermüdung des Faserverbundmaterials und andererseits zu einem hohen Reibverschleiß zwischen dem Schaufelfuß und dessen Aufnahme in der Verdichterscheibe führen.

Der Erfindung liegt daher die Aufgabe einer Triebwerksschaufel zugrunde, den 1-7 ausgeführten Verdichterschaufelfuß mit einem Faserverbundkern und einer metallischen Umhüllung so auszubilden, dass die Schaufel große Kräfte aufnehmen und übertragen kann und eine lange Lebensdauer aufweist.

Erfindungsgemäß wird die Aufgabe mit einem gemäß den Merkmalen des Patentanspruchs 1 ausgebildeten Verdichterschaufelfuß gelöst. Weitere Merkmale und vorteilhafte Weiterbildungen der Erfindung ergeben sich aus den Unteransprüchen.

Der Grundgedanke der Erfindung besteht bei einem Verdichterschaufelfuß der eingangs erwähnten Art mit anderen Worten darin, die am Schaufelfuß herrschenden Druckbelastungen aufgrund der zusammengepressten Fasern und des erst nach dem Zusammenpressen in die sehr kleinen Hohlräume infiltrierten Matrixmaterials direkt auf die Fasern wirken zu lassen und die von dem Faserverbundkern übertragenen Kräfte durch dessen möglichst innige Verbindung mit der Umhüllung durch eine Mikrostrukturierung der Innenflächen der Umhüllung in den Schaufelfuß einzutragen. Da ein so ausgebildeter Faserverbundkern hohen Biegebeanspruchungen nicht standhält, ist er in einem begrenzten Winkelbereich innerhalb der Ausnehmung in der Verdichterscheibe zur Aufnahme des Schaufelfußes - durch Reibung gedämpft - pendelnd beweglich gehalten.

Durch diesen Faserverbundkern können einerseits große Kräfte aufgenommen und auf die Umhüllung im Bereich des Schaufelfußes übertragen werden, das heißt, in den metallischen Teil des Schaufelfußes eingeleitet werden. Andererseits wird aber die Biegebeanspruchung des Fasermaterials vermindert, indem diese durch das in einem begrenzten Umfang mögliche und durch Reibungskräfte gedämpfte Auspendeln des Schaufelfußes in der Ausnehmung der Verdichterscheibe abgefangen wird.

Eine mit einem derartigen Verdichterschaufelfuß versehene Verdichterschaufel ist zum einen in für den Betrieb des Gasturbinentriebwerks vorteilhafter Weise sehr leicht ausgebildet. Dennoch können die an der Verdichterschaufel wirkenden hohen Kräfte ohne Beschädigung aufgenommen und übertragen werden. Die Verdichterschaufel weist eine hohe dynamische Festigkeit und Ermüdungsstabilität und letztlich eine lange Lebensdauer auf. Die Beanspruchung und der Verschleiß in der Ausnehmung für den Schaufelfuß sind reduziert.

Der Ausgleich der auf die Verdichterschaufel wirkenden Biegespannungen durch ein über Reibungskräfte gedämpftes Auspendeln der Verdichterscheibe erfolgt erfindungsgemäß durch eine in Längsrichtung gerade Ausbildung des Schaufelfußes, dessen Seitenflanken kreisbogenförmig gewölbt sind und in der Ausnehmung der Verdichterscheibe an ebenfalls kreisförmig gekrümmten Stützbereichen unter Überwindung eines Reibungswiderstandes hin und her gleiten können.

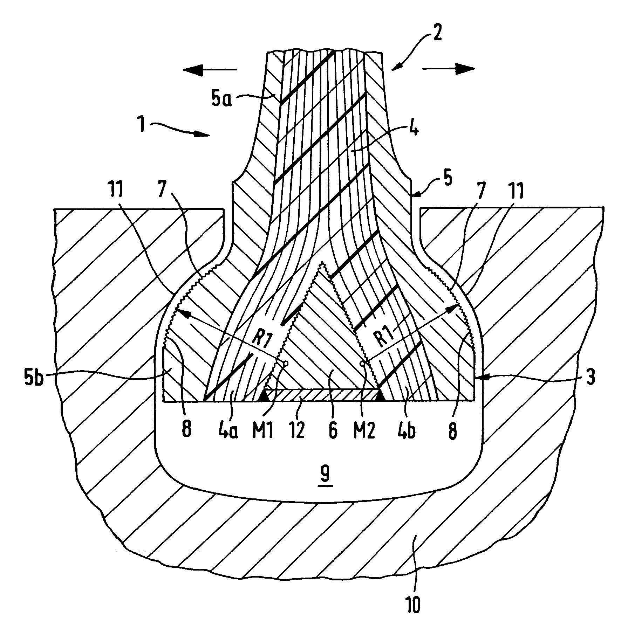

Ein Ausführungsbeispiel der Erfindung wird anhand der Zeichnung, in deren einziger Figur in einer seitlichen Schnittansicht der untere Teil einer aus einem Faserverbundkern und einer metallischen Umhüllung bestehenden Verdichterschaufel wiedergegeben ist, deren Schaufelfuß in eine am Umfang einer Verdichterscheibe eingeformte Ausnehmung eingepasst ist, näher erläutert.

Die Verdichterschaufel 1 umfasst ein Schaufelblatt 2 und einen Schaufelfuß 3 und besteht aus einem Faserverbundkern 4 und einer metallischen Umhüllung 5 mit einem dünnwandigen Teil 5a im Bereich des Schaufelblattes 2 und einem dickwandigen Teil 5b im Bereich des Schaufelfußes 3. Im Schaufelfuß 3 ist der Faserverbundkern 4 durch einen Versteifungskeil 6 in zwei Teilstränge 4a, 4b aufgeteilt, um im Fußbereich eine hohe Festigkeit zu gewährleisten und die am Schaufelblatt 2 wirkenden hohen Zugkräfte effektiv in den Schaufelfuß 3 einleiten zu können. Es wird eine metallische Platte 12 nach erfolgter Infiltration am unteren Fußende der Schaufel eingeschweißt, um die durch Zentrifugalkräfte erzeugten Klemmkräfte aufzunehmen und damit die mechanische Druckbelastung der Kohlenstofffasern zu verringern.

Die metallische Umhüllung 5 und der Versteifungskeil 6 bestehen hier aus Titan, während für den Faserverbundkern 4 ein Composit aus in Kunststoff eingebetteten Kohlenstofffasern verwendet wird. Der Faserverbundkern 4 ist jedoch so gefertigt, dass zunächst ein mit hohem Anpressdruck in Querrichtung der Verdichterschaufel 1 zusammengepresster Faserstrang erzeugt wird, in dessen verbleibende enge Hohlräume erst nach der hohen Verdichtung des Fasermaterials ein Kunststoff infiltriert wird. Durch die hohe Packungsdichte der Faserstruktur in der Kunststoffmatrix mit einem entsprechend geringen Kunststoffanteil kann die Verdichterschaufel 1, das heißt das Fasermaterial direkt, große Zugkräfte aufnehmen und ist eine hohe dynamische Festigkeit und Ermüdungsstabilität gewährleistet, da Druckspannungen nur zu einem Teil über die Kunststoffmatrix übertragen werden müssen.

Zur Herstellung einer großen spezifischen Oberfläche mit dem Ziel einer innigen Verbindung zwischen dem Faserverbundkern 4 und der metallischen Umhüllung 5 ist die metallische Umhüllung an den Innenseiten mindestens im Bereich des Schaufelfußes 3 durch eine mechanische Behandlung mittels Glas- oder Sandstrahlen oder ein aufgeschweißtes feines Drahtgewebe 7 mikrostrukturiert. Gleichermaßen können die an die Faserstruktur anschließenden Außenflächen des Versteifungskeils 6 mit einem derartigen Drahtgewebe 7 versehen sein oder auf andere Weise mikrostrukturiert sein.

Aus der Zeichnung ist ersichtlich, dass der Schaufelfuß 3 über kreisbogenförmig gerundete Stützflächen 8 in einer in den beiden seitlichen Stützbereichen 11 entsprechend gerundet geformten Ausnehmung 9 einer Verdichterscheibe 10 abgestützt ist. Die Radien R1 der seitlich gegenüberliegenden gerundeten Stützflächen 8 sind identisch, haben aber keinen gemeinsamen Mittelpunkt, das heißt, die Mittelpunkte M1, M2 der kreisbogenförmigen Stützflächen 8 sind im Abstand voneinander angeordnet, um die Schaufel bei Zentrifugalbelastung radial zu zentrieren. Für die Funktion des Schaufelfußes 3 in der zuvor geschilderten Ausführung ist es wichtig, dass der Schaufelfuß 3 gerade ausgebildet ist. In dieser Formgestaltung kann die Verdichterschaufel 1 in der Ausnehmung 9 der Verdichterscheibe 10 eine Pendelbewegung ausführen, die aufgrund der unterschiedlichen Mittelpunkte M1 und M2 jedoch begrenzt ist, vielmehr haben die voneinander beabstandeten Mittelpunkte M1, M2 gleichzeitig die oben erwähnte zentrierende Wirkung. Bei einem Stoß auf das Schaufelblatt 2, beispielsweise bei einem Vogelschlag, wird die Schlagwirkung durch das Auspendeln des Schaufelblattes 2 in dem zur Verfügung stehenden begrenzten Umfang und die Reibung auf einer großen Fläche zwischen den Stützflächen 8 des Schaufelfußes 3 und den Stützbereichen 11 der Ausnehmung 9 abgefangen. Das Faserverbundmaterial, das keine Biegebelastungen verträgt, wird dadurch in erheblichem Maße entlastet.

In der Kombination der oben geschilderten Merkmale, das heißt, dem in Querrichtung verdichteten Fasermaterial bei geringem Matrixanteil, der Anordnung des Versteifungskeils, der Oberflächenvergrößerung an den Berührungsflächen des Faserverbundmaterials mit dem Schaufelfuß und dem Versteifungskeil sowie der in Längsrichtung geraden Formgebung des Schaufelfußes mit gegenüberliegenden gewölbten Stütz- und Reibflächen wird somit eine Verdichterschaufel mit geringem Gewicht zur Verfügung gestellt, die eine wirksame Kraftübertragung ermöglicht und trotz der hohen Belastung über eine lange Lebensdauer verfügt.

### Bezugszeichenliste

- 1: Verdichterschaufel (Fanblade)
- 2: Schaufelblatt
- 3: Schaufelfuß
- 4: Faserverbundkern
- 4a, 4b: Teilstränge von 4
- 5: metallische Umhüllung
- 5a: dünnwandiger Teil von 5
- 5b: dickwandiger Teil von 5
- 6: Versteifungskeil
- 7: Drahtgewebe, Mikrostrukturierung
- 8: Kreisbogenförmige Stützflächen (Gleit-/Reibflächen)
- 9: Ausnehmung in 10
- 10: Verdichterscheibe (Fanscheibe)
- 11: Stützbereich von 9
- 12: metallische Platte
- R1: Radien von 8
- M1, M2: Mittelpunkte von 8

## Patentansprüche

1. Verdichterschaufelfuß für Triebwerksschaufeln von Flugzeugtriebwerken, der aus einem Faserverbundkern (4) mit metallischer Umhüllung (5) gebildet ist und der in einer Ausnehmung (9) einer Verdichterscheibe (10) gehalten ist, **dadurch gekennzeichnet, dass** die Fasern in dem Faserverbundkern (4) so dicht gepackt sind, dass die Druckbelastungen am Schaufelblatt (2) direkt auf die Fasern wirken, und der Faserverbundkern (4) zur Krafteinleitung in die Umhüllung (5) des Schaufelfußes (3) über dessen mikrostrukturell vergrößerte Innenfläche (7) innig mit der Umhüllung (5) verbunden ist, und zur Verringerung der Biegebeanspruchung des Faserverbundkerns (4) der Schaufelfuß (3) in der Ausnehmung (9) der Verdichterscheibe (10) in einem begrenzten Winkelbereich reibungsgedämpft pendelnd gelagert ist.

2. Verdichterschaufelfuß nach Anspruch 1, dadurch gekennzeichnet, dass der Faserverbundkern (4) zur unmittelbaren Druckbelastung der Fasern einen im Verhältnis zur Matrix hohen Faseranteil aufweist.

3. Verdichterschaufelfuß nach Anspruch 2, **dadurch gekennzeichnet, dass** der Faserverbundkern (4) aus in Querrichtung der Verdichterschaufel (1) zusammengepressten Fasern mit anschließend infiltrierter Matrix besteht.

4. Verdichterschaufelfuß nach Anspruch 3, **dadurch gekennzeichnet, dass** der Faserverbundkern (4) aus Kohlenstofffasern in einer Kunststoffmatrix besteht.

5. Verdichterschaufelfuß nach Anspruch 1, dadurch gekennzeichnet, dass die Innenflächen der metallischen Umhüllung (5) zur Vergrößerung der spezifischen Oberfläche glasoder sandgestrahlt sind oder ein Drahtgewebe aufgeschweißt ist.

6. Verdichterschaufelfuß nach Anspruch 1, **dadurch gekennzeichnet, dass** der Schaufelfuß (3) in seiner Längsrichtung gerade ausgebildet ist und im Bereich der Ausnehmung (9) kreisbogenförmig gerundete Stützflächen (8) mit zur Begrenzung der Pendelbewegung voneinander abweichenden Mittelpunkten (M1, M2) aufweist, die sich jeweils an einem gleichermaßen gerundeten Stützbereich (11) in der Ausnehmung (9) beweglich abstützen.

7. Verdichterschaufelfuß nach Anspruch 6, **dadurch gekennzeichnet, dass** die gerundeten Stützflächen (8) und/oder Stützbereiche (11) zur reibungsbedingten Dämpfung der Pendelbewegung des Schaufelfußes (3) mikrostrukturiert ausgebildet sind.

8. Verdichterschaufelfuß nach Anspruch 1, **dadurch gekennzeichnet, dass** in den Faserverbundkern (4) ein vom Boden des Schaufelfußes (3) ausgehender Versteifungskeil (6) eingebracht ist, der den Faserverbundkern in Längsrichtung des Schaufelfußes in zwei Teilstränge (4a, 4b) aufteilt.

9. Verdichterschaufelfuß nach Anspruch 8, **dadurch gekennzeichnet, dass** der Versteifungskeil (6) an den Kontaktflächen mit dem Faserverbundkern (4) mikrostrukturiert ausgebildet ist.

10. Verdichterschaufelfuß nach Anspruch 8, **dadurch gekennzeichnet, dass** der Kopfkeil unterhalb der Passung Schaufelfuß (3) zu Verdichterscheibe (10) endet, um bei Zentrifugalbelastung Delaminationskräfte zu vermeiden.

11. Verdichterschaufelfuß nach Anspruch 1, **dadurch gekennzeichnet, dass** an dessen Unterseite zur Verringerung der bei Belastung auf den Faserverbundkern (4) wirkenden Klemmkräfte eine metallische Platte (12) verschweißt ist.
